# EUROPEAN PATENT SPECIFICATION

(11) **EP 2 068 469 B1**
(45) Date of publication and mention of the grant of the patent: **27.06.2012**
(21) Application number: 07291462.5
(22) Date of filing: 06.12.2007
(51) Int. Cl.: H04B 10/26, H04J 14/02

(54) **Method for circulating optical signals in a passive optical distribution network**
Verfahren für das in Umlaufbringen von optischen Signalen in einem passiven optischen Verteilungsnetzwerk
Procédé de circulation de signaux optiques dans un réseau de distribution optique passif

(43) Date of publication of application: 10.06.2009
(73) Proprietor: Alcatel Lucent, 75007 Paris (FR)
(72) Inventor: Zami, Thierry, 91300 Massy (FR)
(74) Representative: Croonenbroek, Thomas Jakob

(56) References cited:
- WO-A-03/103194
- CHO S H ET AL: "Bidirectional WDM-PON Based on Gain-Saturated Reflective Semiconductor Optical Amplifiers" IEEE PHOTONICS TECHNOLOGY LETTERS, IEEE SERVICE CENTER, PISCATAWAY, NJ, US, vol. 17, no. 11, 1 November 2005 (2005-11-01), pages 2460-2462, XP011141244 ISSN: 1041-1135

## Description

### BACKGROUND OF THE INVENTION

The present invention relates to the field of optical networks.

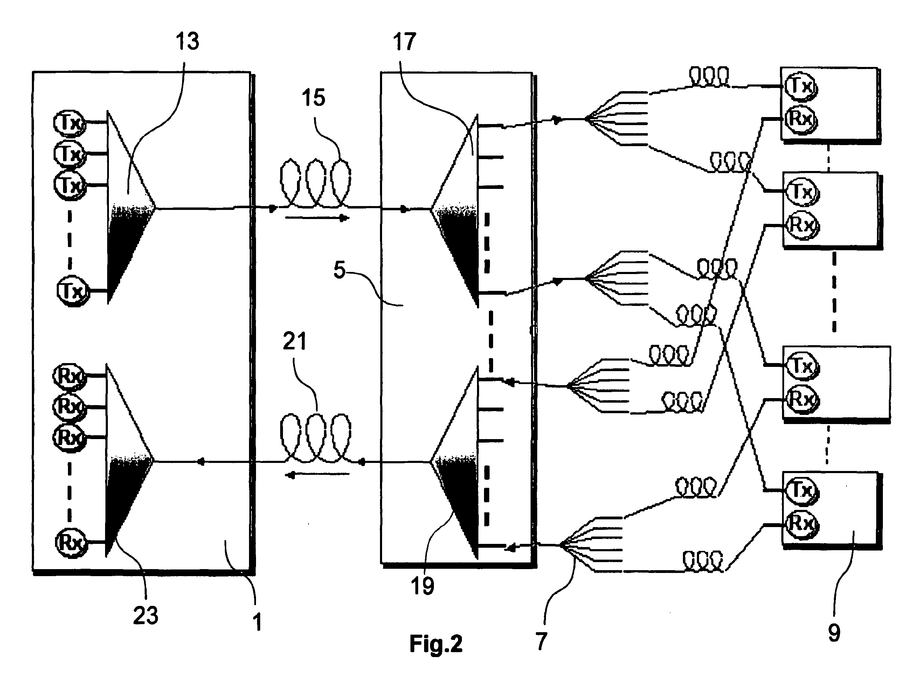

Optical distribution networks mainly consist of optical links between a terminal and a plurality of units, located on the subscriber side, to provide a connection and allow the exchange of data. In order to ease the management of the network and to minimize the influence of the distance between the base station and the terminals, passive optical networks (PON) appear to be an attractive solution. In such networks, several subscribers share the same optical fiber and there is no active equipment between the optical line terminal (OLT) and the optical network units (ONUs).

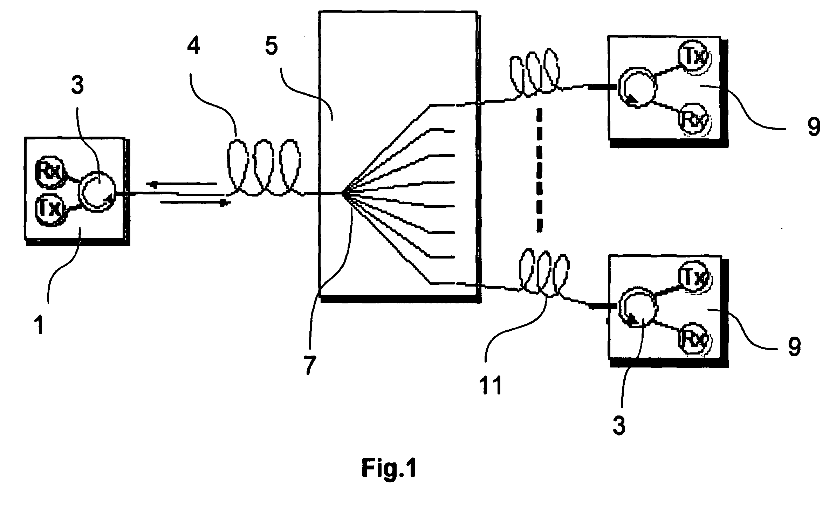

Fig.1 depicts the structure of such passive optical network. The optical line terminal (OLT) 1 comprises an optical transmitter (Tx) to send out a signal, an optical receiver (Rx) to receive a signal and an optical circulator 3 to separate upstream and downstream signals. A primary bidirectional optical fiber 4 transports signals to a remote node 5 comprising an optical coupler 7. Outputs of said optical coupler are connected to each optical network unit (ONU) 9 through secondary bidirectional optical fibers 11. Each ONU comprises an optical transmitter (Tx), an optical receiver (Rx) and an optical circulator 3.
Nevertheless, the number of subscribers on a common optical fiber is limited and a solution to increase the network capacity is to use wavelength division multiplexing (WDM) technology. Wavelength division multiplexing technology consists in the multiplexing of different channels corresponding to different wavelengths into one multiplexed signal transmitted along an optical link. Thus, several PONs can be gathered in a WDM-PON as presented on Fig.2. In this configuration, the OLT 1 comprises a plurality of transmitters (Tx) and receivers (Rx). The transmitted signals are multiplexed by a first multiplexer 13, sent to a remote node 5 through a downstream optical fiber 15 and demultiplexed in a first demultiplexer 17. Signals are then transmitted to the ONUs 9 through optical couplers 7 and secondary optical fibers 11. In the same way, upstream signals are sent from the ONUs 9, optically coupled, multiplexed in a second multiplexer 19, transmitted to the OLT 1 through an upstream optical fiber 21 and demultiplexed by a second demultiplexer 23. Optimization of such technology has lead to the use of dense wavelength division multiplexing (DWDM) networks wherein the frequency spacing between two neighbor wavelength is minimized.
The main problem with such technique is that the control of the laser source wavelengths needs to be very accurate to prevent from wavelength superposition and therefore requires the use of temperature controlled laser sources. The use of said temperature controlled laser sources at the ONUs, which are located on the subscribers side, being too expensive and above all difficult to manage for the network operator , the solution is the remote coloring technique where blank signals are continuously sent from OLT to ONUs, externally modulated by the ONUs and sent back to the OLT. Thus, remote coloring allows the use of DWDM networks but requires additional optical fibers to bring blank signals to ONUs and therefore increase the cost of such networks.

### SUMMARY OF THE INVENTION

One object of the present invention is to optimize the number of optical fibers used in a DWDM-PON and consequently to overcome the previously cited drawbacks of the state of the art.

This optimization is achieved by a method for circulating optical signals in a passive optical distribution network comprising an Optical Line Terminal (OLT), and a plurality of Optical Network Units (ONUs), said method comprising steps of sending continuous optical signals from said optical line terminal to said optical network units, modulating said continuous optical signals in said optical network units and sending said modulated optical signals back to optical line terminal. Said continuous optical signals are grouped into a first and a second subset of optical signals respectively multiplexed in a first and second non overlapping set of wavelength channels, said first subset of optical signals being sent from optical line terminal to optical network units through a first bidirectional optical fiber and said second subset of optical signals being sent from optical line terminal to optical network units through a second bidirectional optical fiber, wherein said modulated optical signals of said first set of wavelength channels are sent back to optical line terminal through said second bidirectional optical fiber, and wherein said modulated optical signals of said second set of wavelength channels are sent back to optical line terminal through said first bidirectional optical fiber.

Advantageously, wavelength distributions of said first and second set of wavelength channels represent a first and second wavelength comb having the same channel spacing and shifted with respect to each other of a predetermined value.

Preferably, said predetermined value corresponds to half the value of said comb channel spacing.

Alternatively, distribution optical network in accordance with one of the previous claims wherein the wavelength comb channel spacing is comprised between 0.1 nm and 1.1 nm.

Preferably, said first and second set of wavelength channels are comprised in a band lying from 1520nm to 1580nm.

### BRIEF DESCRIPTION OF THE DRAWINGS

FIG.1 is a diagram representing a passive optical network (PON) as known in the state of the art;
FIG.2 is a diagram representing a dense wavelength division multiplexing passive optical (DWDM-PON) network according to the state of the art;
FIG.3 is a diagram representing a dense wavelength division multiplexing passive optical network (DWDM-PON) according to the present invention;
FIG.4 is a diagram representing the frequency comb repartition in an upstream optical fiber according to the invention.

### DETAILED DESCRIPTION OF THE INVENTION

In the following description, same references represent the same components.

As used herein, the term "optical circulator" refers to an optical fiber component used to separate optical powers traveling in opposite directions in a single optical fiber.
As used herein, the term "blank signal" refers to a signal comprising no useful data and used as a carrier.

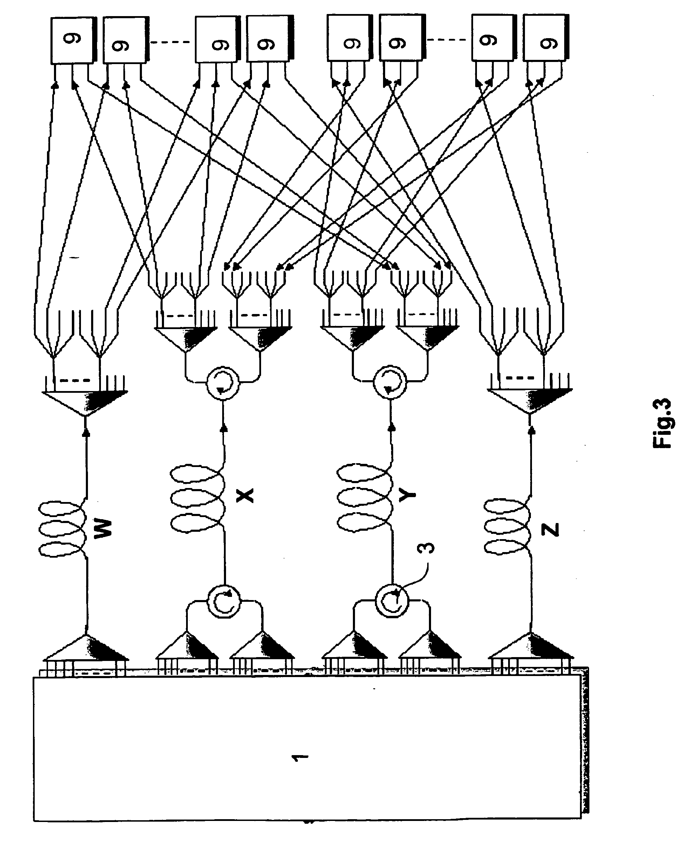

The diagram of Fig.3 represent the configuration of a distribution network according to the present invention.
The general idea to decrease the number of optical fibers needed in the network is to organize the DWDM-PONs by pair and to use a common optical fiber for two signals traveling in opposite direction. Downstream signals are transmitted through two downstream optical fibers (W and Z) as previously with the downstream optical fiber 15 in Fig.2. Blank signals are distributed in two groups with a frequency comb shifted with respect to the other and continually sent through two different bidirectional optical fibers (X and Y) to ONUs 9. Blank signals are externally modulated at each ONU 9 to produce upstream signals which are sent back to the OLT 1. Signals coming from the first bidirectional optical fiber (X) are sent back on the second bidirectional optical fiber (Y) and conversely. As a consequence, in both bidirectional optical fibers X and Y, downstream blank signals interlace with upstream signals so that we have two contra-propagating sets of WDM channels. This is technically possible without crosstalk thanks to the frequency shift of both frequency combs. At both ends of the bidirectional optical fibers, optical circulators 3 allow the separation of blank and upstream signals.

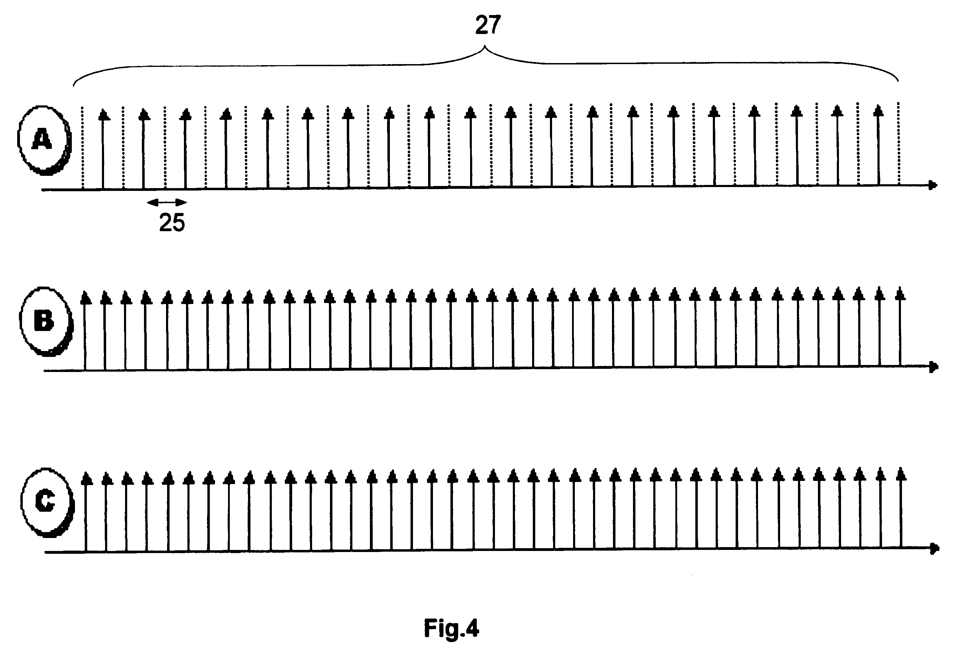

Fig.4 represents the frequency comb 27 of one group (diagram A). The channel spacing 25 between two consecutive frequencies is as small as technically possible to transmit as many wavelength channels as possible on a given bandwidth and therefore to produce Dense WDM network. In practice, the value of this channel spacing 25 is approximately 1nm and the bandwidth for the frequency comb 27 is usually comprised between 1520 and 1580nm (C band). Diagrams B represents both contra-propagating frequency combs in the optical fibers X of the figure 3 whereas diagram C represent both contra-propagating frequency combs in the optical fibers Y. In both cases, black arrows correspond to the blank signals and grey arrows correspond to the upstream signals. Thus, Fig.4 shows clearly the frequency shift between both frequency combs.
To better understand the present invention, we can consider the example where a provider has to connect 1280 subscribers in a given area. A simple PON (presented on Fig.1) can connect up to 32 subscribers with one optical fiber, therefore 40 optical fibers are needed to connect the 1280 subscribers. With a classical DWDM-PON, 40 different wavelengths comprising signals for 16 different ONUs can be transmitted, therefore 6 optical fibers (2 for downstream signals, 2 for blank signals and 2 for upstream signals) are needed to connect the 1280 subscribers. The present invention allows to use only 4 optical fibers to connect the 1280 subscribers, the quality of signal being equivalent between the different configurations.
Thus, the present invention allows to decrease the number of needed optical fibers in the case of a dense population (big cities) distribution network. Equipment resources are saved and the cost of the network is noticeably reduced.

## Claims

1. Method for circulating optical signals in a passive optical distribution network comprising
- an Optical Line Terminal (OLT) (1), and
- a plurality of Optical Network Units (ONUs) (9)
said method comprising steps of:
- sending continuous optical signals from said optical line terminal (1) to said optical network units (9)
- modulating said continuous optical signals in said optical network units (9)
- sending said modulated optical signals back to optical line terminal (1)
**characterized in that**
said continuous optical signals are grouped into a first and a second subset of optical signals respectively multiplexed in a first and second non overlapping set of wavelength channels, said first subset of optical signals being sent from optical line terminal (1) to optical network units (9) through a first bidirectional optical fiber (X) and said second subset of optical signals being sent from optical line terminal to optical network units through a second bidirectional optical fiber (Y), distinct from the first bidirectional optical fiber (X),
wherein said modulated optical signals of said first set of wavelength channels are sent back to optical line terminal (1) through said second bidirectional optical fiber (Y), and
wherein said modulated optical signals of said second set of wavelength channels are sent back to optical line terminal (1) through said first bidirectional optical fiber (X).

2. Method for circulating optical signals in a passive optical distribution network in accordance with claim 1 wherein wavelength distributions of said first and second set of wavelength channels represent a first and second wavelength comb (27) having the same channel spacing (25) and shifted with respect to each other of a predetermined value.

3. Method for circulating optical signals in a passive optical distribution network in accordance with claim 2 wherein said predetermined value corresponds to half the value of said comb channel spacing (25).

4. Distribution optical network adapted to carry out the method steps of claims 2 or 3 wherein the frequency comb channel spacing (25) is comprised in a range from 0.1 nm to 1.1 nm.

5. Distribution optical network according to claim 4 and/or adapted to carry out the method steps of claims 1, 2 or 3 wherein said first and second set of wavelength channels are comprised in a band lying from 1520nm to 1580nm.

## Patentansprüche

1. Verfahren für das in Umlaufbringen von optischen Signalen in einem passiven optischen Verteilungsnetzwerk mit:
- einem optischen Leitungsabschluss (OLT) (1), und
- einer Mehrzahl von optischen Netzwerkeinheiten (ONUs) (9)
wobei das Verfahren die folgenden Schritte umfasst:
- Senden von kontinuierlichen optischen Signalen von dem besagten optischen Leitungsabschluss (1) an die besagten optischen Netzwerkeinheiten (9)
- Modulieren der besagten kontinuierlichen optischen Signale in den besagten optischen Netzwerkeinheiten (9)
- Zurücksenden der besagten modulierten optischen Signale an den optischen Leitungsabschluss (1)
**dadurch gekennzeichnet, dass**
die besagten kontinuierlichen optischen Signale in einen ersten und einen zweiten Teilsatz von optischen Signalen gruppiert werden, welche jeweils in einen ersten und einen zweiten nicht überlappenden Satz von Wellenlängenkanälen gemultiplext werden, wobei der besagte erste Teilsatz von optischen Signalen über eine erste bidirektionale optische Faser (X) von dem optischen Leitungsabschluss (1) an die optischen Netzwerkeinheiten (9) gesendet wird, und der besagte zweite Teilsatz von optischen Signalen über eine zweite bidirektionale optische Faser (Y), welche sich von der ersten bidirektionalen optischen Faser (X) unterscheidet, von dem optischen Leitungsabschluss an die optischen Netzwerkeinheiten gesendet wird,
wobei die besagten modulierten optischen Signale des besagten ersten Satzes von Wellenlängenkanälen über die besagte zweite bidirektionale optische Faser (Y) an den optischen Leitungsabschluss (1) zurückgesendet werden, und
wobei die besagten modulierten optischen Signale des besagten zweiten Satzes von Wellenlängenkanälen über die besagte erste bidirektionale optische Faser (X) an den optischen Leistungsanschluss (1) zurückgesendet werden.

2. Verfahren für das in Umlaufbringen von optischen Signalen in einem passiven optischen Verteilungsnetzwerk nach Anspruch 1, wobei die Verteilungen der Wellenlängen des besagten ersten und des besagten zweiten Satzes von Wellenlängenkanälen einen ersten und einen zweiten Wellenlängenkamm (27) darstellen, welche einen selben Kanalabstand (25) aufweisen und um einen vorgegebenen Größenwert zueinander versetzt sind.

3. Verfahren für das in Umlaufbringen von optischen Signalen in einem passiven optischen Verteilungsnetzwerk nach Anspruch 2, wobei der besagte vorgegebene Größenwert der Hälfte des Größenwertes des besagten Kanalabstands (25) des Kamms entspricht.

4. Optisches Verteilungsnetzwerk, dazu ausgelegt, die Verfahrensschritte gemäß den Ansprüchen 2 oder 3 durchzuführen, wobei der Kanalabstand (25) des Frequenzkamms (25) zwischen 0,1 nm und 1,1 nm beträgt.

5. Optisches Verteilungsnetzwerk nach Anspruch 4, und/oder dazu ausgelegt, die Verfahrensschritte gemäß den Ansprüchen 1, 2 oder 3 durchzuführen, wobei der besagte erste und der besagte zweite Satz von Wellenlängenkanälen in einem Band, welches in einem Bereich von 1520nm bis 1580nm liegt, enthalten sind.

## Revendications

1. Procédé de circulation de signaux optiques dans un réseau de distribution optique passif comprenant
- un terminal de ligne optique (OLT) (1), et
- une pluralité d'unités de réseau optique (ONU) (9)
ledit procédé comprenant les étapes suivantes :
- envoyer des signaux optiques continus à partir dudit terminal de ligne optique (1) vers lesdites unités de réseau optique (9)
- moduler lesdits signaux optiques continus dans lesdites unités de réseau optique (9)
- renvoyer lesdits signaux optiques modulés au terminal de ligne optique (1)
**caractérisé en ce que**
lesdits signaux optiques continus sont groupés en un premier et un deuxième sous-ensembles de signaux optiques respectivement multiplexés dans un premier et un deuxième ensembles non chevauchants de canaux de longueur d'onde, ledit premier sous-ensemble de signaux optiques étant envoyé à partir du terminal de ligne optique (1) vers des unités de réseau optique (9) à travers une première fibre optique bidirectionnelle (X) et ledit deuxième sous-ensemble de signaux optiques étant envoyé à partir du terminal de ligne optique vers des unités de réseau optique à travers une deuxième fibre optique bidirectionnelle (Y), distincte de la première fibre optique bidirectionnelle (X),
dans lequel lesdits signaux optiques modulés dudit premier ensemble de canaux de longueur d'onde sont renvoyés au terminal de ligne optique (1) à travers ladite deuxième fibre optique bidirectionnelle (Y), et
dans lequel lesdits signaux optiques modulés dudit deuxième ensemble de canaux de longueur d'onde sont renvoyés au terminal de ligne optique (1) à travers ladite première fibre optique bidirectionnelle (X).

2. Procédé de circulation de signaux optiques dans un réseau de distribution optique passif selon la revendication 1 dans lequel les distributions de longueur d'onde desdits premier et deuxième ensembles de canaux de longueur d'onde représentent un premier et un deuxième peignes de longueurs d'onde (27) ayant le même espacement entre canaux (25) et décalés l'un par rapport à l'autre selon une valeur prédéterminée.

3. Procédé de circulation de signaux optiques dans un réseau de distribution optique passif selon la revendication 2 dans lequel ladite valeur prédéterminée correspond à la moitié de la valeur dudit espacement entre canaux des peignes (25).

4. Réseau optique de distribution adapté pour exécuter les étapes du procédé selon la revendication 2 ou 3 dans lequel l'espacement entre canaux des peignes de fréquences (25) est dans une plage comprise entre 0,1 nm et 1,1 nm.

5. Réseau optique de distribution selon la revendication 4 et/ou adapté pour exécuter les étapes du procédé selon la revendication 1, 2 ou 3 dans lequel lesdits premier et deuxième ensembles de canaux de longueur d'onde sont dans une bande comprise entre 1520 nm et 1580 nm.
